Europäisches Patentamt

European Patent Office

Office européen des brevets

(19)

(11) Numéro de publication : **0 441 074 B1**

(12) **FASCICULE DE BREVET EUROPEEN**

(45) Date de publication du fascicule du brevet :
**02.03.94 Bulletin 94/09**

(21) Numéro de dépôt : **90403558.1**

(22) Date de dépôt : **12.12.90**

(51) Int. Cl.⁵ : **G01D 5/22,** G01P 3/44,
G01P 3/48

(54) Capteur inductif et dispositifs de mesure du déplacement d'un organ mobile.

(30) Priorité : **14.12.89 FR 8916556**

(43) Date de publication de la demande :
**14.08.91 Bulletin 91/33**

(45) Mention de la délivrance du brevet :
**02.03.94 Bulletin 94/09**

(84) Etats contractants désignés :
**BE CH DE ES GB IT LI**

(56) Documents cités :
**CH-A- 647 316**
**FR-A- 2 425 648**
**GB-A- 1 236 071**
**GB-A- 2 132 362**
**US-A- 3 863 235**

(73) Titulaire : **COMMISSARIAT A L'ENERGIE
ATOMIQUE
31-33, rue de la Fédération
F-75015 Paris (FR)**

(72) Inventeur : **Clergeot, Henri
4 Allée de Québec
F-91300 Massy (FR)**
Inventeur : **Placko, Dominique
21 Allée de la Toison d'Or
F-94000 Creteil (FR)**
Inventeur : **Plantevin, Michel
41 Avenue Henri Pontier
F-13100 Aix en Provence (FR)**

(74) Mandataire : **Mongrédien, André et al
c/o BREVATOME 25, rue de Ponthieu
F-75008 Paris (FR)**

EP 0 441 074 B1

# Description

Le domaine de l'invention est celui de la mesure du déplacement, translation ou rotation, d'un organe mobile, en particulier lorsque ce dernier n'est pas directement accessible. L'invention est notamment destinée à être appliquée à la mesure du déplacement d'un organe mobile, placé à l'intérieur d'une enceinte métallique amagnétique ou à faible perméabilité, renfermant un fluide sous pression à température élevée. C'est en particulier le cas pour la détection de la position des barres de contrôle dans la cuve d'un réacteur nucléaire à eau sous pression.

Différents types de dispositifs de mesure ont déjà été utilisés pour contrôler et mesurer, à travers la paroi d'une enceinte étanche, le déplacement d'un organe mobile à l'intérieur de cette enceinte étanche. On utilise, entre autres, des dispositifs exploitant des phénomènes magnétiques ou électromagnétiques.

Le brevet français, publié sous le numéro 2 425 648, décrit un dispositif de ce type, et en particulier un détecteur de champ magnétique. Celui-ci comporte un circuit magnétique en forme de tore comprenant un noyau ferromagnétique placé sur un support en un matériau amagnétique et un enroulement conducteur autour de ce noyau. L'enroulement est alimenté par un courant périodique, tel qu'en l' absence du champ à détecter, le noyau ne soit pas saturé. On mesure la chute de potentiel créé par ce champ aux bornes de cet enroulement. Lorsque ce dispositif est soumis à l'action d'un champ magnétique externe, radial par rapport au circuit magnétique, et d'intensité supérieure à celle du champ coercitif de ce dernier, la variation de flux à travers l'enroulement est nulle. De ce fait, la différence de potentiel aux bornes de l' enroulement se réduit à la chute ohmique dans ce dernier.

Mais ce type de détecteur nécessite l'implantation d'aimants permanents sur l'organe mobile. Ces aimants permanents doivent être montés avec beaucoup de précautions, puisqu'ils doivent être orientés tous dans le même sens, en fonction de la position de leurs pôles nord et sud ; sinon, ces aimants permanents peuvent perdre leur aimantation, ce qui nécessite des interventions pénalisantes. Le but de l'invention est de remédier à un tel inconvénient, pour proposer un capteur capable de mesurer, à travers une paroi métallique amagnétique ou à faible perméabilité, le déplacement d'un organe mobile ne comportant que des cibles ferromagnétiques.

A cet effet, un premier objet principal de l'invention est un capteur inductif, fonctionnant par détection de la variation d'une grandeur électromagnétique à travers un circuit magnétique et qui comprend :

- deux noyaux ferromagnétiques en forme de U, disposés dos à dos dans un même plan, présentant une face avant dirigée vers les cibles à détecter et une face arrière, et recevant respectivement un bobinage d'excitation qui permet de créer le champ magnétique dans les deux noyaux ferromagnétiques, et un bobinage de mesure, disposé en opposition, qui permet de mesurer la réluctance du circuit magnétique tout en s'affranchissant des effets parasites des grandeurs d'influence, tel que le champ magnétique environnant ou la température ; le bobinage d'excitation comportant M spires est alimenté par un courant sinusoïdal d'amplitude I et de fréquence f qui crée un champ magnétique alternatif dont le flux F est tel que : $M.I = F.R = $ Constante, où R est la réluctance globale du circuit magnétique ;

- deux plaques de support et de blindage en un matériau amagnétique bon conducteur de l'électricité et gainées par un isolant électrique ; ces deux plaques, disposées respectivement de part et d'autre des deux noyaux ferromagnétiques permettent de maintenir ces derniers et de concentrer les lignes de champ vers la cible ferromagnétique ;

- un noyau d'équilibrage constitué de deux demi-cylindres, l'un étant en un matériau amagnétique et l'autre en un matériau ferromagnétique, ce noyau d'équilibrage étant disposé près de la face arrière du capteur.

Dans un premier cas, ce noyau d'équilibrage a son axe de révolution parallèle à l'axe des pôles des noyaux ferromagnétiques.

Dans un autre cas, ce noyau d'équilibrage a son axe de révolution perpendiculaire à l'axe des pôles des noyaux ferromagnétiques.

La rotation du noyau d'équilibrage autour de son axe de révolution modifie la réluctance du circuit magnétique de la face arrière du capteur, ce qui permet d'ajuster la reproductibilité des performances d'un capteur à l'autre.

Le capteur élémentaire, tel que défini ci-dessus est placé de préférence dans un boîtier de protection en un matériau amagnétique. Un tel capteur est d'un encombrement relativement réduit et ne nécessite pas d'aimants permanents sur l'organe mobile, mais seulement de simples cibles en matériau ferromagnétique qui peuvent éventuellement être des dents taillées dans la masse. Dans ces conditions, les seules interventions éventuelles se limitent aux capteurs. Selon l'invention, le capteur inductif est placé, par sa face avant de détection, en regard de l'élément mobile, sur lequel sont fixées les cibles en un matériau ferromagnétique, et duquel il est généralement séparé par une paroi métallique amagnétique ou à faible perméabilité.

Bien entendu, il va de soi qu'un tel capteur permet également de suivre avec précision le déplacement d'un organe mobile comportant des cibles ferromagnétiques, mais dont la paroi de séparation n'est pas métallique ; ou encore s'il n'y a pas de paroi de séparation.

Lors de chaque passage d'une cible ferromagnétique devant le capteur, ce dernier délivre un signal caractéristique permettant d'effectuer une mesure de la vitesse ou du déplacement de l'organe mobile portant une pluralité de cibles.

De ce fait, la présente invention a également pour objet un dispositif de mesure de la vitesse de déplacement d'un organe mobile portant une pluralité de cibles ferromagnétiques régulièrement espacées. Ce dispositif se caractérise en ce qu'il comporte :

- un capteur inductif élémentaire à deux noyaux ferromagnétiques placé par sa face de détection en regard de l'organe mobile, et dont le bobinage d'excitation est relié à une source de courant alternatif pilotée en fréquence par un oscillateur ;
- une ligne de mesure des signaux comprenant un amplificateur différentiel ; un filtre passe-bande dont les signaux de sortie sont multipliés par un signal de référence à l'aide d'un multiplicateur, déphasé d'un angle $\Phi$ optimum par rapport au courant d'excitation du capteur à l'aide d'un déphaseur ; un filtre passe-bande ; un circuit de mise en forme des signaux et des moyens de comptage et d'affichage des signaux ainsi obtenus.

Dans une deuxième version, le capteur selon l'invention comporte deux étages de mesure constitué chacun de :

- deux noyaux ferromagnétiques en forme de U disposés dos à dos dans un même plan ;
- un bobinage de mesure disposé en opposition ; ces deux étages de mesure étant séparés entre eux et maintenus extérieurement par un ensemble de trois plaques de support et de blindage, et ayant un seul bobinage d'excitation disposé autour des deux plaques extérieures et un seul noyau d'équilibrage placé près de la face arrière.

Un tel capteur, à deux étages, peut être utilisé pour effectuer une mesure de déplacement d'un organe mobile portant des cibles.

De ce fait, la présente invention a également pour objet un dispositif de mesure de déplacement d'un organe mobile par comptage des cibles ferromagnétiques passant devant le capteur. Ce dispositif se caractérise en ce qu'il comporte :

- un capteur inductif à deux étages placé par sa face de détection en regard de l'organe mobile, et dont le bobinage d'excitation est relié à une source de courant alternatif pilotée en fréquence par un oscillateur ;
- deux lignes de mesure des signaux comprenant respectivement un amplificateur différentiel ; un filtre passe-bande dont les signaux de sortie sont multipliés par un signal de référence à l'aide d'un multiplicateur déphasé d'un angle $\Phi$ optimum par rapport au courant d'excitation du capteur à l'aide d'un déphaseur réalisant ainsi une détection synchrone ; un filtre passe-bas et un circuit de mise en forme des signaux, le déphasage des signaux entre les deux lignes de mesure étant enregistré par un circuit logique de comptage et de détermination du sens de déplacement ou de rotation de l'organe mobile, et éventuellement visualisé sur des moyens d'affichage.

Ce même capteur inductif à deux étages peut aussi être utilisé pour effectuer une mesure analogique de déplacement d'un organe mobile.

De ce fait, la présente invention a encore pour objet un dispositif de mesure analogique de déplacement d'un organe mobile portant une cible ferromagnétique. Ce dispositif se caractérise en ce qu'il comporte :

- un capteur inductif à deux étages placé par sa face de détection en regard de l'organe mobile, et dont le bobinage d'excitation est relié à une source de courant alternatif pilotée en fréquence par un oscillateur ;
- deux lignes de mesure des signaux comprenant respectivement un amplificateur différentiel ; un filtre passe-bande dont les signaux de sortie sont multipliés par un signal de référence à l'aide d'un multiplicateur déphasé d'un angle $\Phi$ optimum par rapport au courant d'excitation du capteur à l'aide d'un déphaseur réalisant ainsi une détection synchrone ; un filtre passe-bas dont les signaux de sortie des deux lignes de mesure sont soustraits les uns des autres par un circuit commun de soustraction.

De préférence, le circuit de soustraction est complété par un circuit de linéarisation qui délivre un signal proportionnel au déplacement de la cible.

Dans une variante, le dispositif de mesure analogique de déplacement comporte en outre des moyens d'addition des signaux de sortie des filtres passe-bas et un circuit logique de signalisation de position et de détection de sens de déplacement de l'organe mobile dont les indications peuvent être visualisées sur un afficheur.

Un tel dispositif permet notamment de mesurer de faibles déplacements de l'organe mobile avec une grande précision, comme par exemple une mesure de fin de course sans contact d'un organe mobile.

La présence d'une paroi métallique amagnétique ou à faible perméabilité, placée entre l'organe mobile portant les cibles ferromagnétiques et le capteur, provoque l'apparition de courants de Foucault dans cette paroi.

Ces courants de Foucault créent des pertes qui se traduisent, au niveau du signal mesuré par une composante en phase avec le courant d'excitation I. Le signal de sortie peut alors s'écrire :

$$Um = Ua + j\,Ur$$

où Ua est la composante en phase et Ur la composante en quadrature avec le courant d'excitation I ; Um étant la tension induite aux bornes du bobinage.

Aux fréquences basses, pour lesquelles les courants de Foucault dans la paroi présentent une influence négligeable, le flux magnétique est quasiment en phase avec le courant d'excitation : le signal de sortie Um du capteur évolue alors de façon analogue à celui d'un capteur inductif classique et croît directement avec la fréquence d'excitation.

Lorsque la fréquence d'excitation augmente, l'influence des courants de Foucault augmente.

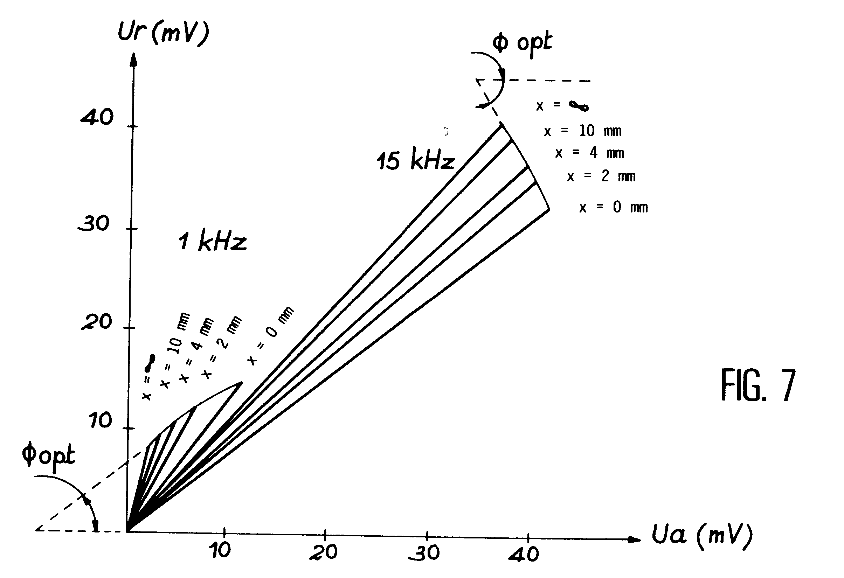

A titre d'exemple, la figure 7 présente le diagramme de Fresnel du vecteur Um représentant les tensions délivrées par un capteur selon diverses positions de la cible, pour deux fréquences d'excitation différentes. Dans ce cas particulier, la portion de courbe sur laquelle évolue l'extrémité du vecteur mesuré peut être aisément assimilée à une droite formant un angle $\Phi_{opt}$ avec l'axe des abscisses.

La partie "traitement du signal" associée à ce capteur peut exploiter naturellement la valeur de l'angle $\Phi_{opt}$ au moyen d'une détection synchrone afin d'extraire le terme utile à partir des signaux observés.

Cet angle dépend de la fréquence d'excitation de la perméabilité, de la résistivité, et de l'épaisseur de la paroi.

Ainsi, les dispositifs de mesure du déplacement d'un organe mobile comprennent une détection synchrone référencée par rapport à cet angle, par le réglage du déphaseur.

Plus précisément, les dispositifs de mesure du déplacement d'un organe mobile se caractérisent en ce que le signal de référence de la détection synchrone est déphasé par rapport au courant d'excitation de l'angle $\Phi$ optimum.

D'autres caractéristiques et avantages de la présente invention apparaitront plus clairement à la lecture de la description qui suit, d'exemples de réalisation et d'utilisation donnés à titre illustratif, mais nullement limitatif du capteur inductif, objet de l'invention.

Cette description sera faite en regard des figures schématiques annexées qui représentent respectivement :

- figure 1, un schéma du capteur selon l'invention dans une première réalisation ;
- figure 2, une coupe partielle des deux noyaux ferromagnétiques montrant le montage du bobinage de mesure ;
- figure 3, un schéma relatif à une autre réalisation du capteur selon l'invention ;
- figure 4, un schéma d'un exemple d'utilisation du capteur de la figure 1 pour la réalisation d'un dispositif de mesure de la vitesse de déplacement d'un organe mobile ;
- figure 5, un schéma d'un exemple d'utilisation du capteur de la figure 3 pour la réalisation d'un dispositif de mesure du déplacement d'un organe mobile et de détermination de son sens de déplacement;
- figure 6, un schéma d'un exemple d'utilisation du capteur de la figure 3 pour la réalisation d'un dispositif de mesure analogique de déplacement d'un organe mobile;
- figure 7, le diagramme de Fresnel du capteur pour deux fréquences d' excitation ;
- figure 8, un schéma relatif à l'installation selon l'invention, sur une cuve de réacteur nucléaire.

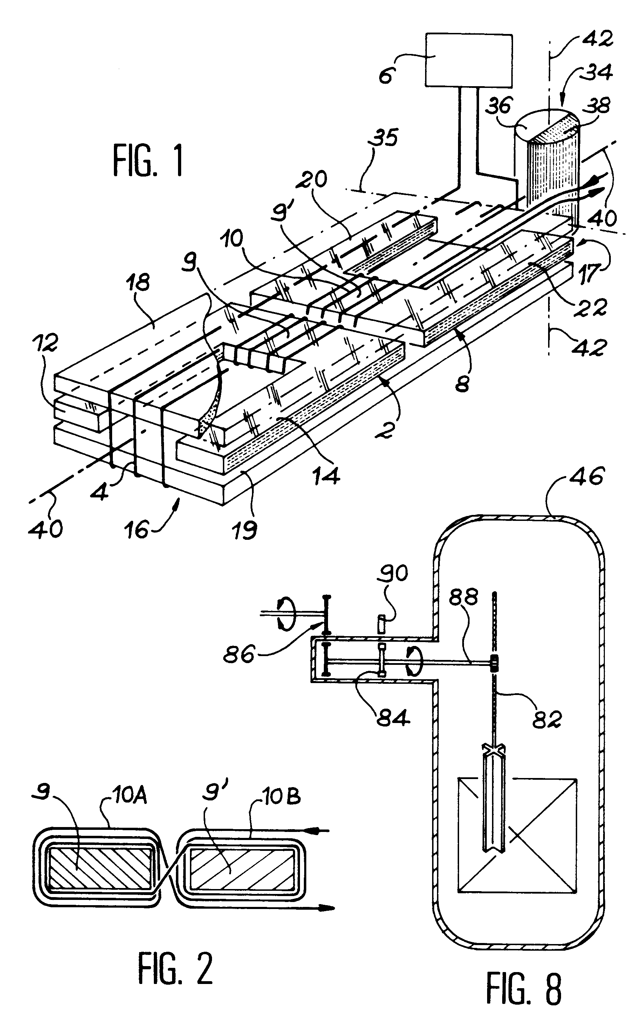

En référence à la figure 1, le capteur inductif selon l'invention est constitué de deux noyaux ferromagnétiques en forme de U, 2 et 8, disposés dos à dos dans un même plan.

Les deux branches 12 et 14 du noyau ferromagnétique 2 en forme de U sont orientées vers la face de détection 16 du capteur.

Un bobinage de mesure 10 comportant N spires est enroulé respectivement autour des parties centrales 9 et 9' des deux noyaux ferromagnétiques 2 et 8.

Un tel bobinage de mesure 10 est représenté plus en détail sur la figure 2 qui montre, en coupe, les deux parties centrales 9 et 9' des noyaux ferromagnétiques 2 et 8, autour desquelles sont disposées respectivement N spires 10A et 10B enroulées en opposition, ce qui permet de s'affranchir des effets parasites de grandeurs physiques d'influence, tels que le champ magnétique environnant, la température ambiante, ...

Les deux bornes de ce bobinage de mesure 10 sont reliées à un dispositif de mesure et de traitement du signal non représenté et qui sera décrit plus loin.

Sur la figure 1, sont aussi représentés les autres éléments essentiels du capteur inductif. On distingue en particulier les deux plaques de support et de blindage 18 et 19 en un matériau amagnétique bon conducteur de l'électricité et gainées par un isolant électrique non représenté. Ces deux plaques 18 et 19 sont disposées de part et d'autres des deux noyaux ferromagnétiques 2 et 8 pour former une structure du type sandwich.

Autour de ces deux plaques 18 et 19, est enroulé le bobinage d'excitation 4 comportant M spires, à savoir trois sur la figure 1.

Ce bobinage d'excitation 4 est alimenté par une source de courant électrique alternatif 6.

L'organe mobile dont on doit détecter la position est muni de plusieurs éléments, appelés cibles, en un matériau ferromagnétique, par exemple de l'acier X13BC fourni par la Firme Aubert et Duval. Ces cibles peuvent être constituées par de simples plaquettes ferromagnétiques, disposées le long ou autour de l'organe mobile. De telles cibles peuvent être détectées par le capteur à travers une paroi métallique amagnétique ou à faible perméabilité. Le principe de fonctionnement du capteur selon l'invention est le suivant. Le capteur inductif, selon l'invention, est placé de manière à ce que sa face de détection 16, constituée par l'extrémité des deux branches 12 et 14 du noyau ferromagnétique 2, soit positionnée face à l'organe mobile, les deux branches 12 et 14 étant perpendiculaires au sens de déplacement de l'organe mobile. Lorsqu'une cible fixée sur l'organe mobile passe à proximité des extrémités des deux branches 12 et 14, cet organe a tendance à fermer le circuit magnétique constitué par ce premier noyau ferromagnétique entouré du bobinage d'excitation 4. Or, ce dernier, lorsqu'il est alimenté en courant électrique alternatif par la source de courant alternatif 6, crée dans les noyaux ferromagnétiques 2 et 8 un champ magnétique.

Contrairement au capteur de l'art antérieur, le capteur inductif selon l'invention fonctionne à courant alternatif de valeur efficace constante. De ce fait, le nombre M de spires du bobinage d'excitation 4 étant constant, le produit du flux d'induction dans le circuit magnétique par la réluctance de celui-ci est également constant.

$$M.I = R.F$$

Les cibles fixées sur l'organe mobile modifiant le flux d'induction dans le circuit magnétique, la réluctance de celui-ci s'en trouve également modifiée. C'est la variation de cette réluctance qui est mesurée par la tension aux bornes du bobinage de mesure 10. Le fait que les deux parties 10A et 10B du bobinage de mesure 10 soient montées en opposition a pour conséquence que les effets parasites s'annulent.

La réalisation des deux noyaux ferromagnétiques 2 et 8 peut être faite sous la forme d'une superposition de lamelles ayant subi une passivation de surface, ce qui permet d'éliminer les courants de Foucault. Les plaques support 18 et 19 sont réalisées en un matériau amagnétique, bon conducteur d'électricité, par exemple avec de l'alliage d'aluminium A-U4G. Les plaques support 18 et 19 sont de préférence gainées par un isolant électrique.

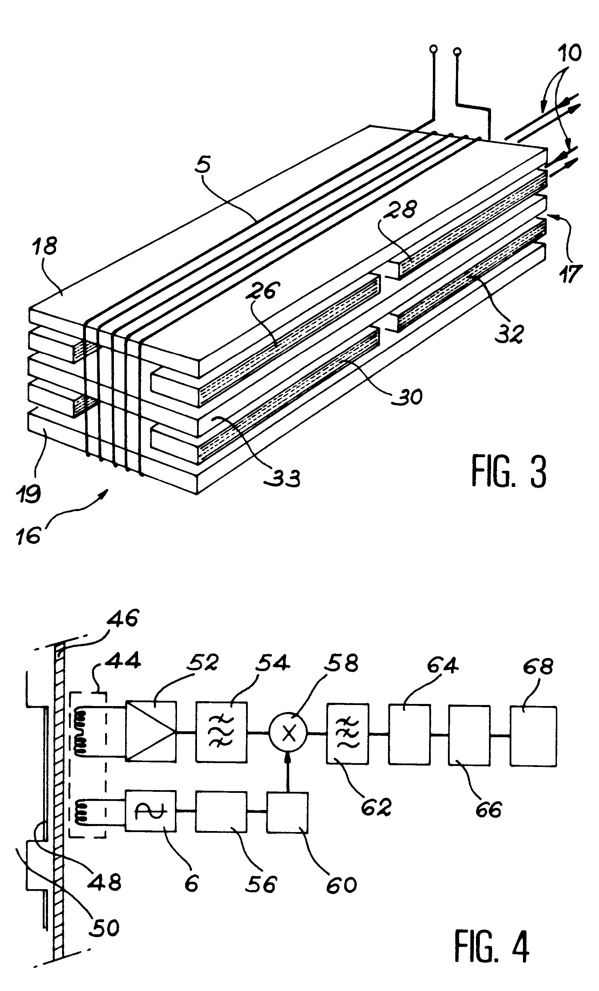

En référence à la figure 3, une deuxième réalisation du capteur inductif selon l'invention prévoit l'utilisation de deux circuits magnétiques, dans le but de réaliser simultanément deux mesures. En effet, le fait de n'effectuer qu'une seule mesure permet de détecter les passages des cibles, de compter celles-ci et donc de mesurer la vitesse de déplacement de l'organe mobile. Par contre, il n'est pas possible de détecter le sens de déplacement de l'organe mobile en n'utilisant qu'un seul circuit magnétique. En conséquence, dans le cas de la figure 3, ce sont deux mesures simultanées qui sont effectuées.

Cette deuxième variante de réalisation concerne un capteur inductif à deux étages de mesure constitué chacun de deux noyaux ferromagnétiques 26, 28 et 30, 32 disposés respectivement dos à dos dans un même plan. Ces deux couples de noyaux ferromagnétiques 26, 28 et 30, 32 comportent chacun un bobinage de mesure comme représenté sur la figure 2. Un tel capteur comporte deux plaques support extérieures 18 et 19 et une plaque support intermédiaire 34, placée entre les deux circuits magnétiques constitués respectivement par les deux noyaux ferromagnétiques supérieurs 26 et 28, et par les noyaux ferromagnétiques inférieurs 30 et 32. Ce sont donc les deux tensions de sortie des deux bobinages de mesure 10 de ces deux circuits magnétiques qui sont utilisées pour mesurer le déplacement de l'organe mobile et le sens de déplacement. Les dispositifs de mesure correspondant à cette deuxième variante de réalisation du capteur sont détaillés plus loin.

De tels capteurs inductifs, une fois construits, possèdent des défauts magnétiques ou des asymétries magnétiques inhérents à la fabrication ou au montage. Pour remédier à ces inconvénients, le capteur inductif selon l'invention est équipé d'un noyau d'équilibrage 34 constitué de deux demi-cylindres 36 et 38, dont l'un 36 est en un matériau amagnétique et l'autre 38 en un matériau ferromagnétique. Ce noyau d'équilibrage 34 est placé près de la face arrière du capteur, en regard des deux branches 20 et 22 du noyau ferromagnétique 8. Il peut être centré sur l'axe longitudinal 40 du capteur et de manière à ce que son axe de révolution 42 soit perpendiculaire à l'axe 35 des pôles du noyau ferromagnétique 8. Il peut également être positionné de manière à ce que son axe de révolution 42 soit parallèle à l'axe 35 des pôles du noyau ferromagnétique 8. La rotation de ce noyau d'équilibrage 34 permet de modifier la réluctance du circuit magnétique de la face arrière 17 du capteur. Ceci permet donc d'ajuster la reproductibilité des performances d'un capteur magnétique à l'autre.

Le dispositif de mesure représenté sur la figure 4 permet la mesure de la vitesse de déplacement de l'organe mobile. On a représenté sur cette figure 4 cet organe mobile 50 équipé d'une des cibles 48 placées à intervalles réguliers. L'organe mobile 50 est séparé du détecteur 44 par la paroi métallique amagnétique 46 qui isole l'organe mobile 50 du capteur 44 à deux noyaux ferromagnétiques. Les bornes du bobinage de mesure du capteur 44 sont connectées à un amplificateur différentiel 52 à la sortie duquel est placé un premier filtre passe-bande 54. La sortie du bobinage d'excitation du capteur 44 est connectée à une source de courant alternatif 6 commandée en fréquence par un oscillateur 56. Un multiplicateur 58 reçoit les signaux de sortie du premier filtre passe-bande 54 pour les multiplier par un signal de référence. Les signaux sont déphasés d'un angle Φ optimum à l'aide d'un déphaseur 60 connecté à l'oscillateur 56.

L'opération de déphasage permet, en association avec le deuxième filtre passe-bande 62, d'extraire la composante du signal qui présente le maximum de dynamique dans la bande passante requise par l'application que l'on fait du capteur, selon l'invention.

La sortie du deuxième filtre passe-bande 62 est connectée à l'entrée d'un circuit de mise en forme d'impulsions 64, à seuil et hystérésis réglables. Celui-ci permet de générer des impulsions qui sont enregistrées par le compteur 66 pendant un intervalle de temps donné. On dispose ainsi à la sortie du compteur 66 d'un signal proportionnel à la vitesse de déplacement ou de rotation de l'organe mobile 50. La ligne de mesure peut être complétée par un afficheur 68 pour faciliter l'exploitation des résultats fournis par le compteur 66.

La mesure du déplacement de l'organe mobile par comptage d'impulsions impose l'utilisation d'un capteur inductif à deux étages.

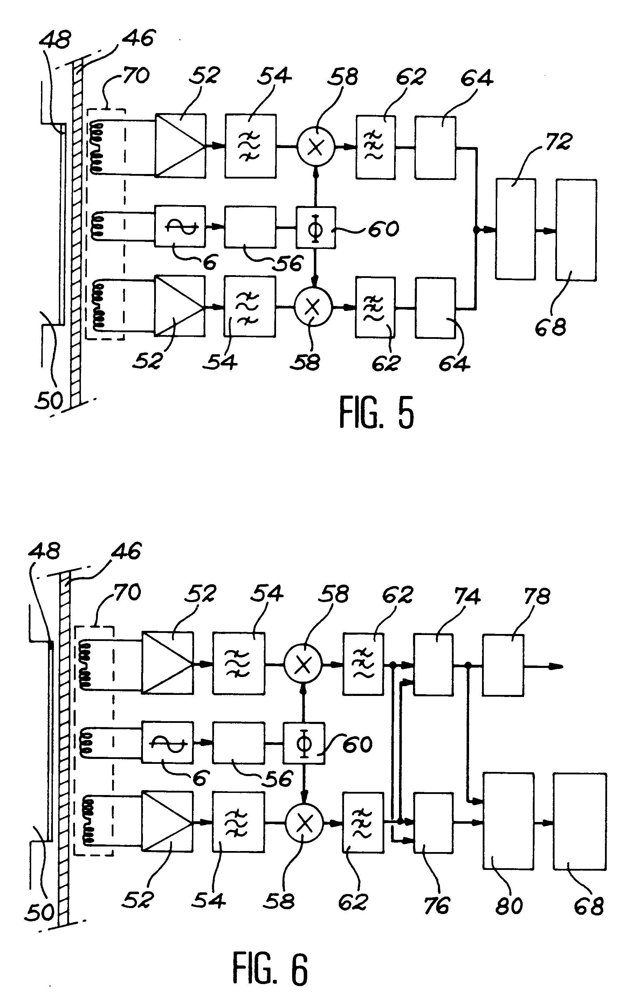

En référence à la figure 5 représentant une installation destinée à la mesure du déplacement et à la détermination du sens de déplacement d'un organe mobile par comptage d'impulsion, le capteur inductif à deux étages 70 est placé en face de la paroi amagnétique 46 derrière laquelle se déplace l'organe mobile 50 pourvu de cibles ferromagnétiques 48, régulièrement espacées.

Le bobinage d' excitation du capteur 70 est connecté à une source de courant alternatif 6 pilotée en fréquence par un oscillateur 56.

Un tel dispositif comprend également deux lignes de mesure de signaux délivrés par le capteur à deux étages 70. Chacune de ces lignes comporte un amplificateur différentiel 52 connecté à un premier filtre passe-bande 54 dont les signaux de sortie sont multipliés par un signal de référence à l'aide d'un multiplicateur 58, déphasé d'un angle $\Phi$ optimum, par rapport au courant d' excitation du capteur, par l'intermédiaire d'un déphaseur commun 60. Les signaux de sortie de chacun des multiplicateurs 58 sont traités respectivement par un filtre passe-bas 62 puis, après passage dans un circuit de mise en forme à seuil et hystérésis réglables 64, les signaux des deux lignes de mesure sont enregistrés par un circuit logique 72 de comptage des cibles 48 et de détermination du sens de déplacement de l'organe mobile 50. La position et le sens de déplacement peuvent éventuellement être visualisés sur un afficheur 68.

Sur la figure 6, on a représenté un dispositif selon l'invention qui permet, à l'aide d'un capteur à deux étages 70 disposé en regard des cibles 48, d'effectuer une mesure analogique du déplacement de l'organe mobile 50.

Le bobinage d'excitation du capteur 70 est alimenté en courant alternatif par une source 6 et piloté en fréquence par un oscillateur 56.

Le début des deux lignes de mesure des signaux délivrés par le capteur 70 sont identiques à celle du dispositif décrite précédemment et représentée sur la figure 5.

Par contre, à la sortie des filtres passe-bas 62, les signaux des deux lignes de mesure sont soustraits entre eux par des moyens de soustraction 74, puis éventuellement traités par un circuit de linéarisation 78 qui délivre un signal proportionnel au déplacement de la cible.

Ce dispositif comprend également des moyens d'addition 76 et un circuit logique 80 de calcul de la position et du sens de déplacement de l'organe mobile 50 à partir des signaux délivrés par les moyens de soustraction 74 et les moyens d'addition 76. Ces informations peuvent éventuellement être visualisées sur un afficheur 68.

La figure 7 illustre, à titre d'exemple, le diagramme des tensions Um délivrées par un capteur inductif pour deux fréquences d'excitation : 1 KHz et 15 KHz, et pour différentes distances entre la paroi amagnétique et la cible : 0 mm $\leqq$ d $\leqq \infty$.

L'extrémité du vecteur $\overrightarrow{Um}$ se déplace sur une courbe très proche d'une droite formant un angle $\Phi$ optimum avec l'axe des abscisses.

En référence à la figure 8, une application préférentielle du capteur inductif selon l'invention est la détection de la position et du sens de déplacement des barres de contrôle 82 d'un réacteur nucléaire 86 à eau sous pression. Ces barres de contrôle 82 sont mises en translation par l'intermédiaire d'une crémaillère accouplée à un arbre en rotation 88 sur lequel est fixée une roue dentée 84. Les dents de cette dernière portent des cibles ferromagnétiques, cette roue dentée 84 étant l'organe mobile dont on mesure la rotation à l'aide du capteur selon l'invention. La paroi 46 du réacteur nucléaire est amagnétique. Le capteur inductif 90 est alors placé à l'extérieur de cette paroi 46, en regard de la roue dentée 84. Il est placé de préférence dans un boîtier de protection en un matériau amagnétique, et appelé "doigt de gant". L'arbre 88 est entraîné en rotation par un accouplement électromagnétique 86 à travers la paroi 46 du réacteur nucléaire. Lors de ce mouvement, la roue dentée 84 est entraînée en rotation. De ce fait, les cibles ferromagnétiques placées à sa périphérie se déplacent et le capteur inductif 90 détecte ce déplacement. On peut donc ainsi apprécier le déplacement en translation des barres de contrôle 82 placées à l'intérieur du réacteur nucléaire.

**Revendications**

1. Capteur inductif, fonctionnant par détection de la variation de la réluctance à travers un circuit magnétique, caractérisé en ce qu'il comprend:
   - une face avant de détection (16) et une face arrière (17), deux noyaux ferromagnétiques (2, 8) en forme de U, disposés dos à dos dans un même plan, recevant un bobinage d'excitation (4) pour créer un champ magnétique dans lesdits noyaux ferromagnétiques (2, 8), et un bobinage de mesure (10) disposé en opposition autour des deux noyaux ferromagnétiques (2, 8) pour mesurer la réluctance du circuit magnétique, le bobinage d'excitation (4) étant alimenté par un courant sinusoïdal ;

- deux plaques support (18, 19) en un matériau amagnétique, disposées de part et d'autre des deux noyaux ferromagnétiques (2, 8) pour maintenir ces derniers, le bobinage d'excitation (4) étant enroulé autour des deux plaques support (18,19) ;

- un noyau d'équilibrage (34) cylindrique autour d'un axe de révolution (42), constitué de deux demi-cylindres (36, 38), dont l'un (36) est en un matériau amagnétique et l'autre (38) est en un matériau ferromagnétique, le noyau d'équilibrage (34) étant disposé près de la face arrière (17) du capteur.

2. Capteur selon la revendication 1, caractérisé en ce que les deux pôles du deuxième noyau ferromagnétique (8) définissant un axe (35), le noyau d'équilibrage (34) a son axe de révolution (42) parallèle à l'axe (35) des pôles du deuxième noyau ferromagnétique (8).

3. Capteur selon la revendication 1, caractérisé en ce que, les deux pôles du deuxième noyau ferromagnétique (8) définissant un axe (35),
le noyau d'équilibrage (34) a son axe de révolution (42) perpendiculaire à l'axe des pôles du deuxième noyau ferromagnétique (8).

4. Dispositif de mesure de la vitesse de déplacement d'un organe mobile (50) portant une pluralité de cibles ferromagnétiques (48) régulièrement espacées, caractérisé en ce qu'il comporte :

- un capteur selon l'une quelconque des revendications 1 à 3, placé par sa face avant de détection (16) en regard de l'organe mobile (50) et dont le bobinage d'excitation (4) est relié à une source de courant alternatif (6) pilotée en fréquence par un oscillateur (56) ;

- une ligne de mesure comprenant un amplificateur différentiel (52), un filtre passe-bande (54) dont les signaux de sortie sont multipliés par un signal de référence par un multiplicateur (58) et déphasé d'un angle (Φ) optimum par rapport au courant d'excitation du capteur à l'aide d'un déphaseur (60), un deuxième filtre passe-bande (62), un circuit de mise en forme des signaux (64) et des moyens de comptage (66) et d'affichage (68) des signaux ainsi obtenus.

5. Capteur selon l'une des revendications 1 à 3, caractérisé en ce qu'il comporte :
- deux étapes de mesure, disposés entre lesdites deux plaques support (18, 19) et séparés par une plaque de support intermédiaire (33), chaque étage de mesure comportant deux noyaux ferromagnétiques (26, 28; 30, 32), disposés dos à dos dans un même plan et recevant un bobinage de mesure (10) disposé en opposition autour des deux noyaux ferromagnétiques (26, 28; 30, 32).

6. Dispositif de mesure du déplacement d'un organe mobile (50) par comptage de cibles ferromagnétiques (48) fixées sur l'organe mobile (50) et passant devant le capteur, caractérisé en ce qu'il comporte :

- un capteur selon la revendication 5, placé, par sa face de détection (16), en regard de l'organe mobile (50) et dont le bobinage d'excitation (5) est relié à une source de courant alternatif (6) pilotée en fréquence par un oscillateur (56) ; et

- deux lignes de mesure des signaux comprenant respectivement un amplificateur différentiel (50), un premier filtre passe-bande (54) dont les signaux de sortie sont multipliés par un signal de référence à l'aide d'un multiplicateur (58) et déphasés d'un angle (Φ) optimum par rapport au courant d'excitation du capteur à l'aide d'un déphaseur (60), réalisant ainsi une détection synchrone, un deuxième filtre passe-bas (62), et un circuit de mise en forme des signaux (64), le déphasage des signaux entre les deux lignes de mesure étant enregistré par un circuit logique (72) de comptage et de détermination du sens de déplacement de l'organe mobile (50) et des moyens d'affichage (68).

7. Dispositif de mesure analogique du déplacement d'un organe mobile (50) portant une cible ferromagnétique (48), caractérisé en ce qu'il comporte :

- un capteur selon la revendication 5, placé, par sa face de détection (16), en regard de l'organe mobile (50), et dont le bobinage d'excitation (5) est relié à une source de courant alternatif (6), pilotée en fréquence par un oscillateur (56) ;

- deux lignes de mesure des signaux comprenant respectivement un amplificateur différentiel (52), un premier filtre passe-bande (54) dont les signaux de sortie sont multipliés par un signal de référence à l'aide d'un multiplicateur (58) et déphasés d'un angle (Φ) optimum par rapport au courant d'excitation du capteur à l'aide d'un déphaseur (60), réalisant ainsi une détection synchrone, un deuxième filtre passe-bas (62) dont les signaux de sortie des deux lignes de mesure sont soustraits les uns des autres par un circuit commun de soustraction (74).

8.  Dispositif selon la revendication 7, caractérisé en ce que la sortie des moyens de soustraction (74) est reliée à un circuit de linéarisation (78).

9.  Dispositif selon la revendication 7 ou 8, caractérisé en ce qu'il comprend des moyens d'addition (78) recevant la sortie des deux deuxièmes filtres passe-bas (62) et étant connectés à un circuit logique (80) de calcul de la position et du sens de déplacement de l'organe mobile (50) recevant également les signaux délivrés par les moyens de soustraction (74).

## Claims

1.  Inductive transducer operating by the detection of the variation of the reluctance across a magnetic circuit, characterized in that it comprises a front detection face (16) and a rear face (17), two U-shaped ferromagnetic cores (2, 8), positioned back to back in the same plane and receiving an exciting coil (4) for creating a magnetic field (2, 8) in said ferromagnetic cores and a measuring coil (10) positioned in opposition around the two ferromagnetic cores (2, 8) for measuring the reluctance of the magnetic circuit, the exciting coil (4) being supplied by a sinusoidal current; two amagnetic material support plates (18, 19) positioned on either side of the two ferromagnetic cores (2, 8) for maintaining the latter in place; and a cylindrical balancing core (34) around an axis of revolution (42) constituted by two half-cylinders (36, 38), whereof one (36) is made from an amagnetic material and the other (38) from a ferromagnetic material, the balancing core (34) being placed close to the rear face (17) of the transducer.

2.  Transducer according to claim 1, characterized in that the two poles of the second ferromagnetic core (8) define an axis (35), so that the balancing core (34) has its axis of revolution (42) parallel to the axis (35) of the poles of the second ferromagnetic core (8).

3.  Transducer according to claim 1, characterized in that the two poles of the second ferromagnetic core (8) define an axis (35), so that the balancing core (34) has its axis of revolution (42) perpendicular to the axis of the poles of the second ferromagnetic core (8).

4.  Device for measuring the displacement speed of a moving member (40) carrying a plurality of regularly spaced ferromagnetic targets (48), characterized in that it comprises a transducer according to any one of its claims 1 to 3, placed by its front detection face (16) facing the moving member (50) and whose exciting coil (4) is connected to an alternating current source (6) frequency controlled by an oscillator (56) and a measuring line having a differential amplifier (52), a bandpass filter (54), whose output signals are multiplied by a reference signal by a multiplier (58) and phase-shifted by an optimum angle $\phi$ with respect to the exciting current of the transducer with the aid of a phase shifter (60), a second band-pass filter (62), a signal shaping circuit (64) and means for counting (66) and displaying (68) the thus obtained signals.

5.  Transducer according to any one of the claims 1 to 3, characterized in that it has two measuring stages being said two support plates (18, 19), separated by an intermediate support plate (33), each measuring stage having two ferromagnetic cores (26, 28, 30, 32) placed back to back in the same plane and receiving a measuring coil (10) positioned in opposition around the two ferromagnetic cores (26, 28, 30, 32).

6.  Device for measuring the displacement of a moving member (50) by counting ferromagnetic targets (48) fixed to the moving member (50) and passing in front of the transducer, characterized in that it comprises a transducer according to claim 5, placed by its detection face (16) facing the moving member (50) and whose exciting coil (5) is connected to an alternating current source (6) frequency controlled by an oscillator (56) and two signal measuring lines respectively incorporating a differential amplifier (50), a first bandpass filter (54), whose output signals are multiplied by a reference signal with the aid of a multiplier (58) and phase-shifted by an optimum angle $\phi$ with respect to the exciting current of the transducer with the aid of a phase shifter (60), thus bringing about a synchronous detection, a second low-pass filter (62) and a signal shaping circuit (64), the phase displacement of the signals between the two measuring lines being recorded by a logic circuit (72) for counting and determining the displacement direction of the moving member (50) and display means (68).

7.  Device for the analog measurement of the displacement of a moving member (50) carrying a ferromagnetic target (48), characterized in that it comprises a transducer according to claim 5 positioned, by its detection face (16), facing the moving member (50) and whose exciting coil (5) is connected to an alternating current source (6) frequency controlled by an oscillator (56); two signal measuring lines respectively incorporating a differential amplifier (52), a first band-pass filter (54), whose output signals are multiplied by a reference signal with the aid of a multiplier (58) and phase-shifted by an optimum angle $\phi$ with respect to the exciting current of the transducer with the aid of a phase shifter (60), thus carrying out a synchronous detection, a second low-pass filter (62), whereof the output signals of the two measuring lines are subtracted from one another by a common subtraction circuit (74).

8. Device according to claim 7, characterized in that the output of the subtraction means (74) is connected to a linearization circuit (78).

9. Device according to claims 7 or 8, characterized in that it comprises addition means (76) receiving the output of the two second low-pass filters (62) and being connected to a logic circuit (80) for calculating the position and the displacement direction of the moving member (50) also receiving the signal supplied by the subtraction means (74).

**Patentansprüche**

1. Induktiver Sensor, der durch Detektion der Veränderung des magnetischen Widerstands quer durch einen Magnetkreis läuft, dadurch gekennzeichnet, daß er:
   - eine Frontseite vor der Detektion (16) und eine Frontseite danach (17), zwei, mit den Stegen zueinander in derselben Ebene angebrachte, ferromagnetische Kerne (2, 8) in U-Form, die eine Erregerwicklung (4) abnimmt, um ein Magnetfeld (2, 8) in den besagten ferromagnetischen Kernen zu erzeugen, und eine Meßspule (10), die gegenüberliegend um die beiden ferromagnetischen Kerne (2, 8) angeordnet ist, umfaßt, um den magnetischen Widerstand des Magnetkreises zu messen, wobei die Erregerwicklung (4) durch einen sinusförmigen Strom gespeist wird;
   - zwei Trägerplatten (18, 19) aus nichtmagnetischem Material umfaßt, die an den gegenüberliegenden Seiten der beiden ferromagnetischen Kerne (2, 8) angeordnet sind, um diese letzteren zu halten, wobei die Erregerwicklung (4) um die beiden Trägerplatten (18, 19) gewickelt wird;
   - einen zylindrischen Ausgleichskern (34) um eine Drehachse (42) umfaßt, der aus zwei Halb-Zylindern (36, 38) gebildet wird, von denen einer (36) aus nichtmagnetischem Material ist und der andere (38) aus ferromagnetischem Material ist, wobei der Ausgleichskern (34) in der Nähe der hinteren Frontseite (17) des Sensors angeordnet ist.

2. Sensor gemäß Anspruch 1, dadurch gekennzeichnet, daß die beiden Pole des zweiten ferromagnetischen Kerns (8) eine Achse (35) definieren, und der Ausgleichskern (34) seine Drehachse (42) parallel zur Achse (35) der Pole des zweiten ferromagnetischen Kerns (8) hat.

3. Sensor gemäß Anspruch 1, dadurch gekennzeichnet, daß die beiden Pole des zweiten ferromagnetischen Kerns (8) eine Achse (35) definieren, und der Ausgleichskern (34) seine Drehachse (42) senkrecht zur Achse der Pole des zweiten ferromagnetischen Kerns (8) hat.

4. Vorrichtung zur Messung der Geschwindigkeit der Verschiebung eines beweglichen Gegenstandes (50), der eine Vielzahl von ferromagnetischen Auftreffplatten (48) in regelmäßigen Abständen trägt, dadurch gekennzeichnet, daß sie:
   - einen Sensor gemäß einem der Ansprüche 1 bis 3 umfaßt, der mit seiner Frontseite vor der Detektion (16) bezüglich dem beweglichen Gegenstand (50) angeordnet ist und dessen Erregerwicklung (4) mit einer Wechselstromquelle (6) verbunden ist, deren Frequenz durch einen Oszillator (56) fremdgesteuert wird;
   - eine Messkette, die einen Differentialverstärker (52), einen Bandfilter (54), dessen Ausgangssignale mit einem Referenzsignal durch einen Multiplikator (58) multipliziert und im optimalen Winkel ($\Phi$) bezüglich dem Erregerstrom des Sensors mithilfe eines Phasenverschiebers (60) phasenverschoben werden, einen zweiten Bandfilter (62), eine Schaltung zur Bildung von Signalen (64) und Geräte zur Zählung (66) und zur Anzeige (68) der so erhaltenen Signale umfaßt.

5. Sensor gemäß einem der Ansprüche 1 bis 3, dadurch gekennzeichnet, daß er:
   - zwei Meßstufen umfaßt, die hinter den besagten beiden Trägerplatten (18, 19) angeordnet sind und die durch eine zwischenliegende Trägerplatte (33) getrennt sind, wobei jede dieser Meßstufen zwei ferromagnetische Kerne (26, 28; 30, 32) umfaßt, die mit den Stegen zueinander in derselben Ebene angeordnet sind und die eine Meßspule (10) abnimmt, welche gegenüberliegend um die beiden ferromagnetischen Kerne (26, 28; 30, 32) angeordnet ist.

6. Vorrichtung zur Messung der Verschiebung eines mobilen Gegenstandes (50) durch Zählung der ferromagnetischen Auftreffplatten (48), die auf dem beweglichen Gegenstand (50) befestigt sind, und vor dem Sensor passieren, dadurch gekennzeichnet, daß sie:

- einen Sensor gemäß Anspruch 5 umfaßt, der mit seiner Detektionsseite (16) gegenüber dem beweglichen Gegenstand 50) angeordnet ist und dessen Erregerwicklung (5) mit einer Wechselstromquelle (6) verbunden ist, deren Frequenz durch einen Oszillator (56) fremdgesteuert wird; und
- zwei Signalmeßketten umfaßt, die entsprechend einen Differentialverstärker (52), einen ersten Bandfilter (54), dessen Ausgangssignale mit einem Referenzsignal mithilfe eines Multiplikators (58) multipliziert und um einen optimalen Winkel ($\Phi$) bezüglich dem Erregerstrom des Sensors mithilfe eines Phasenverschiebers (60) phasenverschoben werden, was folglich eine synchrone Detektion ausführt, einen zweiten Tiefpassfilter (62) und eine Schaltung zur Bildung von Signalen (64), umfaßt, wobei die Phasenverschiebung der Signale zwischen den beiden Meßketten durch einen logischen Schaltkreis (72) zur Zählung und zur Bestimmung der Verschiebungsrichtung des beweglichen Gegenstandes (50) und des Anzeigegeräts (68) aufgezeichnet werden.

7. Vorrichtung zur analogen Messung der Verschiebung eines beweglichen Gegenstandes (50), welcher eine ferromagnetische Auftreffplatte (48) trägt, dadurch gekennzeichnet, daß sie

- einen Sensor gemäß Anspruch 5 umfaßt, der mit seiner Detektionsseite (16) gegenüber dem beweglichen Gegenstand (50) angeordnet ist, und dessen Erregerwicklung (5) mit einer Wechselstromquelle (6) verbunden ist, deren Frequenz von einem Oszillator (56) fremdgesteuert wird;
- zwei Ketten zur Messung von Signalen umfaßt, welche entsprechend einen Differentialverstärker (52), einen ersten Bandfilter (54), dessen Ausgangssignale mit einem Referenzsignal mithilfe eines Multiplikators (58) multipliziert und um einen optimalen Winkel ($\Phi$) bezüglich dem Erregerstrom des Sensors mithilfe eines Phasenverschiebers (60) phasenverschoben werden, was folglich eine synchrone Detektion ausführt, und einen zweiten Tiefpassfilter (62) umfassen, dessen Ausgangssignale der beiden Meßketten durch eine gemeinsamen Substraktionsschaltung (74) voneinander abgezogen werden.

8. Vorrichtung gemäß Anspruch 7, dadurch gekennzeichnet, daß der Ausgang des Substrahierers (74) mit einer Linearisationsschaltung (78) verbunden ist.

9. Vorrichtung gemäß Anspruch 7 oder 8, dadurch gekennzeichnet, daß sie Addierer (76) umfaßt, die den Ausgang der beiden zweiten Tiefpaßfilter (62) empfängt und mit einer logischen Schaltung (80) zur Berechnung der Position und der Verschiebungsrichtung des beweglichen Gegenstands (50) verbunden ist, und ebenso die von dem Substrahierer (74) gelieferten Signale empfängt.

FIG. 1

FIG. 2

FIG. 8

FIG. 3

FIG. 4

FIG. 5

FIG. 6

FIG. 7